# EUROPÄISCHE PATENTSCHRIFT

(11) **EP 3 244 031 B1**
(45) Veröffentlichungstag und Bekanntmachung des Hinweises auf die Patenterteilung: **06.05.2020**
(21) Anmeldenummer: 17161337.5
(22) Anmeldetag: 16.03.2017
(51) Int. Cl.: F01L 13/00

(54) **VARIABLER VENTILTRIEB MIT EINEM KIPPHEBEL**
VARIABLE VALVE DRIVE WITH A ROCKER ARM
COMMANDE DE SOUPAPE VARIABLE COMPRENANT UN CULBUTEUR

(30) Priorität: 13.04.2016 DE 102016004531
(43) Veröffentlichungstag der Anmeldung: 15.11.2017
(73) Patentinhaber: MAN Truck & Bus SE, 80995 München (DE)
(72) Erfinder: Pham, Hai-Son, 90402 Nürnberg (DE)
(74) Vertreter: v. Bezold & Partner Patentanwälte - PartG mbB

(56) Entgegenhaltungen:
- EP-A2- 0 826 866
- DE-A1-102004 040 652
- DE-A1-102005 019 991
- JP-A- H11 336 599
- US-A- 4 572 118

## Beschreibung

Die Erfindung betrifft einen variablen Ventiltrieb für ein Hubventil, insbesondere für ein Ladungswechselventil einer Brennkraftmaschine, das zwischen einer Schließ- und einer Öffnungsstellung mittelbar durch einen Nocken über einen Kipphebel periodisch bewegbar ist.

Es ist bekannt, Gaswechselventile einer Brennkraftmaschine variabel mit unterschiedlichen Öffnungs- und Schließzeitpunkten sowie mit unterschiedlichen Ventilöffnungshüben zu betreiben. Derartige variable Ventiltriebe bieten die vorteilhafte Möglichkeit der gezielten Anpassung des Verlaufes der Ventilhubkurve über dem Nockenwinkel in Abhängigkeit von Betriebsparametern der mit dem jeweiligen Hubventil ausgestatteten Einrichtung, also beispielsweise in Abhängigkeit von Drehzahl, Last oder Temperatur einer Brennkraftmaschine.

Es ist insbesondere bekannt, mehrere unterschiedliche Hubkurven für ein Hubventil dadurch zu erzeugen, dass zur Betätigung dieses Hubventils mehrere Nocken vorhanden sind und dass jeweils die Kontur nur eines Nockens den Hubverlauf bewirkt. Zur Umschaltung auf einen anderen Hubverlauf wird auf die Kontur eines anderen Nockens umgeschaltet. Eine derartige Ventilsteuerung ist aus der DE 42 30 877 A1 vorbekannt. Dabei ist auf einer Nockenwelle drehfest, aber axial verschiebbar ein Nockenwellenblock mit zwei unterschiedlichen Nockenkonturen angeordnet. Entsprechend der Axialstellung des Nockenblocks steht eine Nockenkontur über ein Zwischenglied (Übertragungshebel) mit dem Hubventil in Wirkverbindung. Die Axialverschiebung des Nockenblocks zur Änderung der Ventilparameter erfolgt während der Grundkreisphase entgegen der Wirkung einer Rückstellfeder mittels eines Druckringes.

Aus der DE 195 19 048 A1 ist ein variabler Ventiltrieb für eine Brennkraftmaschine vorbekannt, bei dem auf der Nockenwelle ebenfalls zwei in ihrer Nockenkontur unterschiedlich gestaltete Nocken unmittelbar nebeneinander angeordnet sind. Die Änderung des Nockeneingriffs erfolgt durch ein axiales Verschieben der Nockenwelle mit den auf ihm befindlichen Nocken.

Weiterhin ist aus der DE 195 20 117 C2 ein Ventiltrieb einer Brennkraftmaschine vorbekannt, bei der auf der Nockenwelle drehfest ein axial verschiebbarer Nockenblock mit mindestens zwei unterschiedlichen Nockenbahnen angeordnet ist. Die Verstellung des Nockenblocks erfolgt über ein Verstellorgan, das im Inneren der Nockenwelle geführt ist. Durch eine stirnseitig an der Nockenwelle angeordnete doppelt wirkende hydraulische oder pneumatische Kolben-Zylinder-Einheit wird das Verstellorgan im Inneren der Nockenwelle verschoben. Das Verstellorgan ist mit einem Mitnahmestück verbunden, das ein axial in der Nockenwelle angeordnetes Langloch durchdringt und in eine Bohrung des Nockenblocks mündet.

Neben der Verwendung mehrerer unterschiedlich geformter Nocken zum Variieren des Ventilhubs ist im Stand der Technik ferner auch die Möglichkeit bekannt, über zwischen Nockenwelle und Hubventil angeordnete Zwischenelemente eine Variabilität des Ventiltriebs zu erzeugen. So offenbart beispielsweise die US 4 572 118 A eine zwischen Nockenwelle und Hubventil geschaltete Einrichtung aus Ventilkipphebel und Übertragungskipphebel, wobei der Übertragungskipphebel an seinem einen Ende über eine Rolle mit der Nockenwelle in Wirkkontakt steht und an seinem andern Ende über eine ventilhubvorgebende Konturfläche mit dem Ventilkipphebel wechselwirkt. Durch ein Verändern der räumlichen Ausrichtung der Konturfläche mittels einer Stelleinrichtung lässt sich dabei der Verlauf des Ventilhubs variieren.

Die Offenlegungsschriften DE 10 2004 040 652 A1 und DE 10 2005 019 991 A1 offenbaren hierzu sehr ähnliche Mechanismen, allerdings für die Fälle, dass das Hubventil über einen Rollenschlepphebel beziehungsweise einen Gabelschlepphebel betätigt wird. Das Einstellen des Ventilhubs erfolgt in der Vorrichtung der DE 10 2004 040 652 A1 über einen Kniehebel, der einerseits über eine ventilhubvorgebende Konturfläche mit dem Rollenschlepphebel in Wirkverbindung steht und andererseits über eine Abstützrolle an einer gehäusefesten Kulissenbahn geführt wird. In der DE 10 2005 019 991 A1 wird hierfür ein federrückgestellter Druckhebel verwendet, der an seinem einen Ende mit der Nockenwelle in Wirkkontakt steht und an seinem anderen Ende an der ventilhubvorgebenden Konturfläche des Gabelschlepphebels anliegt. Nachteilig ist in beiden Fällen allerdings die große Anzahl an verschleißanfälligen Bauteilen.

Ferner offenbaren die EP 0 826 866 A2 und JP H11 336599 A zwischen Nockenwelle und Hubventil geschaltete Übertragungselemente zum Variieren des Ventilhubs, umfassend zwei über ein Planetengetriebe gekoppelte Räder. Das innere Rad steht dabei jeweils in Wirkverbindung mit der Nockenwelle, während das äußere Rad mit dem Hubventil verbunden ist. Über eine Steuereinrichtung, die mit den Planetenrädern gekoppelt ist, kann hierbei der Grad der Rotation und damit eine Variabilität des Ventiltriebs erreicht werden.

Nachteilig bei dem zitierten Stand der Technik ist, dass unterschiedliche Öffnungs- und Schließzeitpunkte sowie unterschiedliche Ventilöffnungshübe nicht stufenlos einstellbar sind. Ebenso ist eine Verstellung mittels axialer Nockenverschiebung immer nur im geschlossenen Zustand der Ventile möglich, sodass die Verstellung über den Zylindern voneinander unabhängig stattfinden muss. Ein weiterer Nachteil ist, dass es mit diesen bekannten Ansätzen nicht möglich ist, einen bestehenden Ventiltrieb ohne Variabilität auf einen Ventiltrieb mit Variabilität umzurüsten, ohne dass dabei Änderungen an umliegenden Bauteilen erforderlich wären, abgesehen von denen, welche unmittelbar für die Realisierung der Variabilität benötigt werden.

Es ist eine Aufgabe der Erfindung, einen verbesserten variablen Ventiltrieb mit einem Kipphebel bereitzustellen, mit dem Nachteile herkömmlicher Techniken vermieden werden können. Die Aufgabe der Erfindung ist es insbesondere, einen variablen Ventiltrieb bereitzustellen, der eine von der vorliegenden Ventilstellung unabhängig stattfindende, stufenlose Veränderung der Ventilöffnungs- und Schließzeitpunkte sowie der Ventilöffnungshübe ermöglicht.

Diese Aufgaben werden durch einen variablen Ventiltrieb mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird ein variabler Ventiltrieb für ein Hubventil bereitgestellt. Das Hubventil ist zwischen einer Schließ- und einer Öffnungsstellung, insbesondere entgegen der Kraft einer Rückstellfeder, mittelbar durch einen Nocken einer Nockenwelle periodisch bewegbar. Das Hubventil ist vorzugsweise ein Ladungswechselventil einer Brennkraftmaschine.

Gemäß allgemeinen Gesichtspunkten der Erfindung umfasst der Ventiltrieb eine schaltbare Kipphebelanordnung zur Betätigung des Hubventils. Unter einer schaltbaren Kipphebelanordnung wird eine Kipphebelanordnung verstanden, die durch eine Schalteinrichtung, in diesem Dokument als Stelleinrichtung bezeichnet, in ihren Übertragungseigenschaften betreffend die Übertragung der Nockenbewegung auf das Hubventil so veränderbar ist, dass ein Ventilöffnungs- und/oder Schließzeitpunkt und/oder eine Höhe des Ventilöffnungshubs veränderbar ist.

Die Kipphebelanordnung umfasst einen ersten Kipphebel, nachfolgend als Übertragungskipphebel bezeichnet, und einen zweiten Kipphebel, nachfolgend als Ventilkipphebel bezeichnet, die auf verschiedenen Kipphebelachsen, die jeweils parallel zur Nockenwellenachse sind, verschwenkbar gelagert sind. Hierbei steht der Ventilkipphebel an einem ersten Ende mit dem Hubventil in Wirkkontakt und weist an einem zweiten Ende eine Rolle, insbesondere eine Druckrolle, auf. Der Übertragungskipphebel ist an einem ersten Ende einem Nocken der Nockenwelle zugeordnet, d. h. steht in Eingriff mit dem Nocken, um die Nockenbewegung abzugreifen. Entsprechend der Nockenbewegung verkippt der Übertragungshebel. An einem zweiten Ende steht der Übertragungskipphebel über eine Konturfläche, insbesondere eine ventilhubvorgebende Konturfläche, mit der Rolle des Ventilkipphebels in Wirkverbindung, derart, dass eine Kippbewegung des Übertragungskipphebels eine korrespondierende Kippbewegung des Ventilkipphebels erzeugt, bei der die Rolle des Ventilkipphebels auf der Konturfläche abrollt. Durch die Verkippung des Übertragungshebels rollt die Rolle des Kipphebels somit auf der Konturfläche ab, und die resultierende Kippbewegung des Ventilkipphebels bewirkt einen entsprechenden Ventilhub. In diesem Sinne sind Übertragungshebel und Ventilhebel in Serie geschaltet, wobei deren Kippbewegung je nach Ausführung auch gegenläufig orientiert sein kann.

Die Konturfläche ist eine Oberfläche des Übertragungskipphebels, auf der die Rolle des Ventilkipphebels bei der Übertragung der Nockenbewegung an das Hubventil hin- und herrollt und so die Bewegung des Übertragungskipphebels an den Ventilkipphebel überträgt bzw. koppelt. Durch die Gestaltung der Oberflächenform der Konturfläche, z. B. der Steigung in Abrollrichtung, kann der Verlauf des Ventilhubs festgelegt werden. Statt des Begriffs Konturfläche wird in diesem Dokument auch der Begriff Rollkontur verwendet.

Der variable Ventiltrieb umfasst eine Stelleinrichtung zum Schalten der Kipphebelanordnung, mittels derer die Konturfläche mittels eines Planetengetriebes, z. B. eines Planetenradsatzes, um die Kipphebelachse des Übertragungskipphebels mit einer bestimmten Übersetzung verdrehbar ist, um eine Verschiebung eines Abrollbereichs der Rolle des Ventilkipphebels auf der Konturfläche zu erzeugen. Vorzugsweise ist die Stelleinrichtung ausgebildet, eine Verdrehung der Konturfläche bzw. des die Konturfläche umfassenden Teils des Übertragungskipphebels relativ zum Ventilkipphebel zu erzeugen. Dadurch ändert sich der von der Rolle des Ventilkipphebels abgegriffene Bereich der Konturfläche und dadurch auch der resultierende Ventilhub und/oder die Ventilöffnungs- bzw. Schließzeiten. Das Planetengetriebe ist nicht Teil der Stelleinrichtung, sondern die Stelleinrichtung wirkt auf ein Planetengetriebe ein, das wiederum die Verdrehung der Konturfläche bewirkt. Mittels der Stelleinrichtung ist somit insbesondere ein Abrollbereich der Rolle des Ventilkipphebels auf der Konturfläche veränderbar. Ebenso ermöglicht das Planetengetriebe ein für die Anwendung günstiges Übersetzungsverhältnis zwischen Kippbewegung des Übertragungskipphebels und des Ventilkipphebels.

Dabei überlagert sich die für die beiden Aktionen Ventilhub und Hubverstellung beschriebene Kinematik. Durch entsprechende Ausgestaltung der Konturfläche besteht ferner die Möglichkeit, das Ventil komplett geschlossen zu halten oder aber auch auf dem maximalen Ventilhub kurzzeitig offen zu halten, wenn entsprechende Abrollbereiche der Konturfläche ohne Steigung ausgeführt sind. Ein besonderer Vorzug liegt ferner darin, dass die Hubverstellung zu jedem beliebigem Zeitpunkt durchgeführt werden kann, d. h., es kann auch, während die Ventile geöffnet, sind eine Verstellung vorgenommen werden. Somit kann eine von der vorliegenden Ventilhubposition sowie Nockenwellendrehung unabhängige Schaltung ermöglicht werden.

Der Ventilhub wird bei diesem Ventiltrieb somit nicht direkt über die Nockenerhebung vorgegeben. Die Nockenkontur dient lediglich der Verkippung eines Zusatzhebels, der vorliegend als Übertragungskipphebel bezeichnet ist. Ein Vorteil des erfindungsgemäßen variablen Ventiltriebs ist, dass die Bauweise von Kipphebel und Nockenwelle unverändert bleiben kann - in Bezug auf einen herkömmlichen nicht-variablen Ventiltrieb. Ein weiterer Vorteil ist, dass der variable Ventiltrieb die Ventilbetätigung mit wenig bewegten Massen bewältigt, da der Ventilkipphebel wie üblich auf- und abkippt, der Übertragungskipphebel ebenfalls auf- und abkippt und die Nockenwelle wie üblich dreht. Dazu können Massen durch die entstehenden Übersetzungen des Planetenradsatzes weiter reduziert werden. Ferner ermöglicht der variable Ventiltrieb eine sehr robuste Lösung zur vollvariablen Steuerung, insbesondere für den Bereich Nutzfahrzeug- und Industriemotoren. Es findet eine Entlastung der Nockenwellenlager statt, da die Kräfte von der durchgehenden Welle des Übertragungskipphebels aufgenommen werden.

Gemäß allgemeinen Gesichtspunkten weist der Übertragungskipphebel zudem ein Planetenträgerelement und mindestens ein Planetenrad des Planetengetriebes auf. Beispielsweise können drei Planetenräder vorgesehen sein. Das mindestens eine Planetenrad ist von dem Planetenträgerelement geführt. Das Planetenträgerelement weist hierbei ferner das erste Ende auf, das mit einem Nocken der Nockenwelle in Eingriff steht. Das Planetenträgerelement kann z. B. über eine Rolle mit dem Nocken der Nockenwelle in Eingriff stehen.

Der Übertragungskipphebel weist ferner ein Hohlrad des Planetengetriebes auf. Das Hohlrad greift in das mindestens eine Planetenrad ein und weist außenumfangseitig die hubvorgebende Konturfläche auf. Das mindestens eine Planetenrad ist im Innenraum des Hohlrads angeordnet und kämmt vorzugsweise mit einer Innenverzahnung des Hohlrads. Das Planetengetriebe weist ferner ein Sonnenrad auf, das mit einer von der Stelleinrichtung verdrehbaren Welle drehfest verbunden ist. Diese Welle wird nachfolgend auch als Sonnenradwelle bezeichnet.

Der Übertragungskipphebel kann somit zwei Baugruppen umfassen, das Planetenträgerelement und das Hohlrad, das an seinem Außenumfang die Konturfläche (Rollkontur) aufweist. Die Nockenkontur wird vom Planetenträger abgegriffen, dessen Winkelbetrag der Verkippung unabhängig vom eingestellten Ventilhub über den gesamten Betrieb konstant bleibt. Durch die Verkippung des Planetenträgerelements und der daraus resultierenden Verdrehung der Planetenräder, ergibt sich die Verdrehung des Hohlrades mit einer entsprechenden Übersetzung. Eine entsprechende Auslegung dieser Übersetzung kann zu einem großen Ventilhub bei einer kleinen Nockenerhebung führen. Somit können rotierende Massen an der Nockenwelle reduziert werden.

Mit anderen Worten kann der Übertragungskipphebel wiederum einen ersten Hebel aufweisen, vorstehend als das Planetenträgerelement bezeichnet, der mit dem Nocken der Nockenwelle in Eingriff steht, und einen zweiten Hebel, aufweisend das Hohlrad mit der Konturfläche, die mit der Rolle des Ventilkipphebels in Wirkverbindung steht. Über das Hohlrad des zweiten Hebels und die Planetenräder des ersten Hebels (Planetenträgerelement) sind dieser erste Hebel und der zweite Hebel des Übertragungskipphebels miteinander bewegungsgekoppelt, insbesondere derart, dass eine von dem Nocken erzeugte Kippbewegung des ersten Hebels zu einer Kippbewegung des zweiten Hebels um die Kipphebelachse des Übertragungskipphebels führt, gemäß der Übersetzung des Planetengetriebes.

Ferner ist mittels der Stelleinrichtung eine Verdrehposition des zweiten Hebels relativ zum ersten Hebel veränderbar, um einen Abrollbereich der Rolle des Ventilkipphebels auf der Konturfläche zu verändern. In der mittels der Stelleinrichtung einstellbaren Verdrehposition sind der erste Hebel und der zweite Hebel dann wieder miteinander bewegungsgekoppelt, so dass sie bei Anregung durch den Nocken gemeinsam um die Kipphebelachse hin- und herverschwenkt werden. Hierdurch kann ein robuster verstellbarer Übertragungsmechanismus zur variablen Übertragung der Nockenbewegung auf den Ventilkipphebel bereitgestellt werden.

Das Sonnenrad befindet sich vorzugsweise auf einer durchgehenden Achse über alle Zylinder. Diese durchgehende Achse ist drehbar gelagert. Planetenträger und Hohlräder sind vorzugsweise für jeden Zylinder getrennt und unabhängig voneinander beweglich. Um den Ventilhub zu verstellen, wird eine Verdrehstellung des Sonnenrads durch die Stelleinrichtung geändert. Dazu kann die Welle, welche die Sonnenräder trägt, von der Stelleinrichtung verdrehbar sein.

Die Stelleinrichtung kann eine elektrische, elektromechanische, mechanische oder hydraulische Stelleinheit umfassen, mittels derer zur Verstellung des Ventilhubs eine Verdrehstellung der das Sonnenrad tragenden Welle einstellbar ist. Durch die Verdrehung des Sonnenrades und der Übertragung dieser Bewegung auf die Planetenräder dreht sich das Hohlrad entsprechend der ausgelegten Übersetzung. Diese kann anders als beim Ventilhub ins Langsame übersetzt sein. Die Stelleinrichtung kann beispielsweise einen Elektromotor umfassen oder als Elektromotor ausgeführt sein.

Gemäß einer weiteren bevorzugten Ausführungsform weist die Konturfläche einen ersten Abrollbereich auf, der keinen Ventilhub erzeugt, wenn die Rolle des Ventilkipphebels auf dem ersten Abrollbereich abrollt. Der erste Abrollbereich bildet insbesondere eine Grundkreiskontur aus und wird nachfolgend auch als Grundkreisbereich bezeichnet. Die Abrollpunkte auf dem Grundkreisbereich weisen einen vorzugsweise konstanten radialen Abstand zur Kipphebelachse des Übertragungshebels auf.

Gemäß dieser bevorzugten weiteren Ausführungsform weist die Konturfläche ferner einen sich an den ersten Abrollbereich anschließenden zweiten Abrollbereich auf, der eine Rampenkontur aufweist. Eine Rampenkontur gibt einen Ventilhub vor, derart, dass der Ventilhub umso größer ist, je weiter die Rolle des Ventilkipphebels von dem ersten Abrollbereich kommend auf dem zweiten Abrollbereich abrollt. Unter einer Rampenkontur wird somit ein Bereich verstanden, der in einer Bewegungsrichtung der Rolle einen ansteigenden Radialabstand zur Kipphebelachse des Übertragungshebels aufweist. In der entgegengesetzten Bewegungsrichtung der Rolle nimmt der Radialabstand auf dem zweiten Abrollbereich folglich ab. Unter einem Abrollbereich wird ein Bereich der Konturfläche verstanden, auf dem die Rolle des Ventilkipphebels bei einer Kippbewegung des Übertragungskipphebels abrollbar ist. Inwieweit die Rolle tatsächlich bei einer Kippbewegung auf einem bestimmten Abrollbereich abrollt, hängt von der Stelleinrichtung eingestellten Verdrehposition der Konturfläche ab.

Bei einer vorteilhaften Variante dieser Ausgestaltungsform weist die Konturfläche einen sich an den zweiten Abrollbereich anschließenden dritten Abrollbereich auf. Der dritte Abrollbereich erzeugt vorzugsweise eine Ventilstellung mit einem vorbestimmten konstanten Ventilhub, beispielsweise eine Ventilstellung mit maximalem Ventilhub, wenn die Rolle des Ventilkipphebels auf dem dritten Abrollbereich abrollt. Die Abrollpunkte auf dem dritten Abrollbereich weisen vorzugsweise einen konstanten radialen Abstand zur Kipphebelachse des Übertragungshebels auf. Der radiale Abstand des dritten Abrollbereichs ist jedoch größer als der des ersten Abrollbereichs.

Der von der Kipphebelrolle abgerollte Bereich der Konturfläche bleibt im Winkelbetrag stets konstant. Durch die Verdrehung der Konturfläche mittels der Stelleinrichtung relativ zum Ventilkipphebel kann jedoch der Bereich der Konturfläche, der von der Rolle tatsächlich abgegriffen wird, d. h. abgerollt wird, verschoben werden. Wird beispielsweise die Konturfläche mittels der Stelleinrichtung relativ zum Ventilkipphebel so verdreht, dass der Kipphebel eine kleinere Strecke auf dem ersten Bereich und stattdessen eine größere Strecke auf dem zweiten Bereich abrollt, vergrößert sich der Ventilhub. Durch eine zweckmäßige Ausgestaltung der Abmessungen und/oder Steigungen bzw. Steigungsverläufe der Abrollbereiche können der Ventilhub und/oder die Ventilöffnungs- und schließzeiten, die aus dem Abrollen des Ventilkipphebels auf der Konturfläche resultieren, eingestellt werden. Je nach Einstellung bzw. Veränderung des Rollbereichs kann das Hubventil beispielsweise komplett geschlossen gehalten werden, beispielsweise wenn die Rolle des Ventilkipphebels ausschließlich auf dem ersten Abrollbereich hin- und herrollt. Ferner besteht die Möglichkeit eines Ventilbetriebs, bei dem das Hubventil kurzzeitig auf dem maximalen Ventilhub offengehalten wird. Dies kann beispielsweise erreicht werden, wenn die Konturfläche durch die Stelleinrichtung in einer Verdrehposition festgelegt wird, bei der die Rollbewegung der Rolle des Ventilkipphebels auch den dritten Bereich zumindest zum Teil umfasst. Während des Abrollens auf dem dritten Bereich wird das Hubventil kurzzeitig auf dem maximalen Ventilhub offen gehalten.

Bei einer weiteren vorteilhaften Variante dieser Ausgestaltungsform weist die Konturfläche einen sich an den dritten Abrollbereich anschließenden vierten Abrollbereich, der wiederum eine Rampenkontur ausbildet, und einen fünften Bereich, der sich an den vierten Abrollbereich anschließt, auf. Die Abrollpunkte auf dem fünften Abrollbereich weisen einen konstanten radialen Abstand zur Kipphebelachse des Übertragungshebels auf. Der radiale Abstand des fünften Abrollbereichs ist größer als der Radialabstand des dritten Abrollbereichs und größer als der Radialabstand des ersten Abrollbereichs. Bei dieser Ausführungsvariante mit fünf Abrollbereichen bildet der dritte Bereich eine Mittelstellung aus, in der das Hubventil kurzeitig, d. h. während des Abrollens der Rolle auf dem dritten Bereich, in einer Öffnungsstellung mit konstanter Hubhöhe, die kleiner als die maximale Hubhöhe ist, offengehalten wird.

Besonders vorteilhaft ist, wenn die Stelleinrichtung ausgeführt ist, eine Verdrehposition der das Sonnenrad tragenden Welle stufenlos zu verändern. Alternativ kann die Stelleinrichtung ausgeführt sein, eine Verdrehposition der das Sonnenrad tragenden Welle in zwei vorbestimmte Lagen zu verändern, so dass zwei verschiedene Ventilhübe schaltbar sind.

Gemäß einer weiteren Ausgestaltungsform kann der Übertragungskipphebel mittels einer Rückstellfeder vorgespannt sein, derart, dass der Übertragungshebel gegen die Nockenwelle gedrückt wird. Hierdurch wird ein sicheres Abgreifen der Nockenbewegung ermöglicht. Beispielsweise kann das Planetenträgerelement des Übertragungskipphebels mittels einer Rückstellfeder vorgespannt sein, derart, dass der Übertragungskipphebel gegen die Nockenwelle gedrückt wird.

Im Rahmen der Erfindung besteht ferner die Möglichkeit, dass der Ventilkipphebel an seinem ventilseitigen Ende eine Aufnahme aufweist, in der ein hydraulisches Ventilspielausgleichselement oder eine Schraube mit Elefantenfuß aufgenommen ist.

Der Ventilkipphebel kann ferner an seiner Unterseite, d. h. der dem Zylinderkopf zugewandten Seite, eine Geometrie zur axialen Fixierung auf einem Lagerbock aufweisen. Beispielsweise kann der Kipphebel eine Lagerung zur Befestigung an einem Kipphebellagerbock aufweisen, an dem die Kipphebelachse angeordnet ist, auf die der Kipphebel mit einer zugeordneten Bohrung schwenkbar aufgesteckt und mittels einer axialen Lagesicherung gehalten ist, wobei die axiale Lagesicherung eine Führungsverbindung als Eingriffselement-Gegenelement-Verbindung zwischen dem Lagerbock und dem Kipphebel ist, bei der ein quer zur Achsrichtung ausgerichtetes Eingriffselement, z. B. in Form eines Ringsteges, in ein zugeordnetes Gegenelement mit axialer Flankenabstützung schwenkbeweglich eingreift.

Gemäß einem weiteren Gesichtspunktes der Erfindung wird eine Anordnung bereitgestellt, umfassend mindestens zwei variable erfindungsgemäße Ventiltriebe, wie beispielsweise vorstehend beschrieben, wobei die Übertragungskipphebel jeweils eine gemeinsame erste Kipphebelachse aufweisen, die Ventilkipphebel jeweils eine gemeinsame zweite Kipphebelachse aufweisen und die mindestens zwei variablen Ventiltriebe eine gemeinsame Stelleinrichtung in Form eines Elektromotors aufweisen. Der Elektromotor steht mit einer zur ersten Kipphebelachse koaxialen Welle, der Sonnenradwelle, auf der jeweils das Sonnenrad jedes der Ventiltriebe angeordnet ist, in Wirkverbindung. Hierbei wird somit nur ein Aktuator/Stellmotor in Form des Elektromotors benötigt, um die Verstellung über alle Zylinder zu betätigen. Ebenfalls findet die Hubverstellung für alle Zylinder gleichzeitig statt, da das dazu gedrehte Sonnenrad auf einer durchgehenden Welle sitzt.

Ein weiterer Aspekt der Erfindung betrifft ein Kraftfahrzeug, insbesondere ein Nutzfahrzeug, mit einem variablen Ventiltrieb, wie in diesem Dokument beschrieben.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Seitenansicht eines Ventiltriebs gemäß einer Ausführungsform der Erfindung;
- Figur 2: eine perspektivische Explosionsdarstellung eines Übertragungskipphebels gemäß einer Ausführungsform der Erfindung;
- Figur 3: eine perspektivische Darstellung eines Ventiltriebs gemäß einer Ausführungsform der Erfindung;
- Figur 4: eine Detailansicht der Kopplung zwischen Ventilkipphebel und Übertragungskipphebel gemäß einer Ausführungsform der Erfindung;
- Figur 5: eine Seitenansicht eines Hohlrades (Verzahnung nicht dargestellt) mit der Konturfläche gemäß einer weiteren Ausführungsform der Erfindung; und
- Figur 6: eine Illustration verschiedener einstellbarer Hubkurven des Hubventils.

Gleiche Teile sind in den Figuren mit denselben Bezugszeichen versehen, so dass die in den Figuren gezeigten verschiedenen Ansichten des Ventiltriebs auch aus sich heraus verständlich sind.

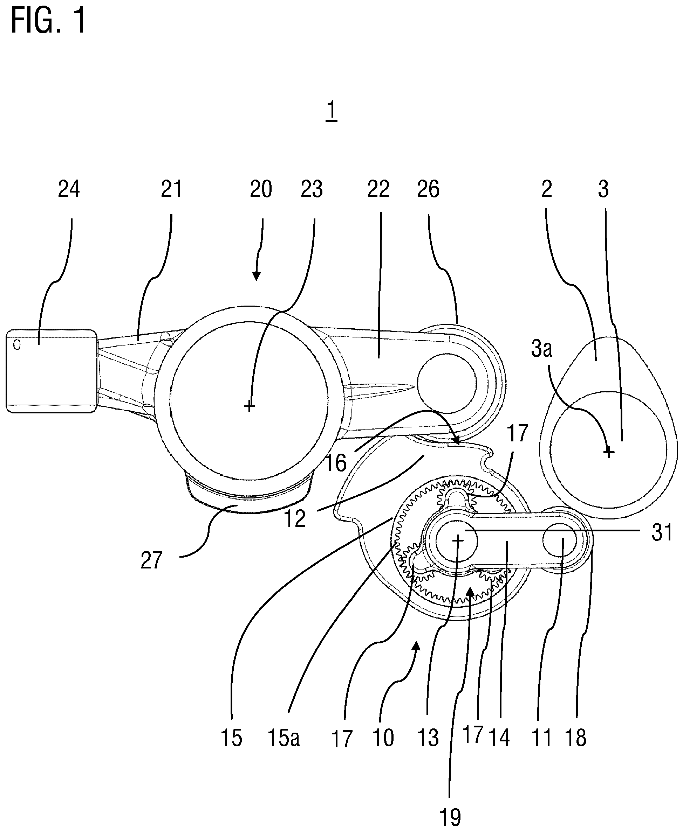

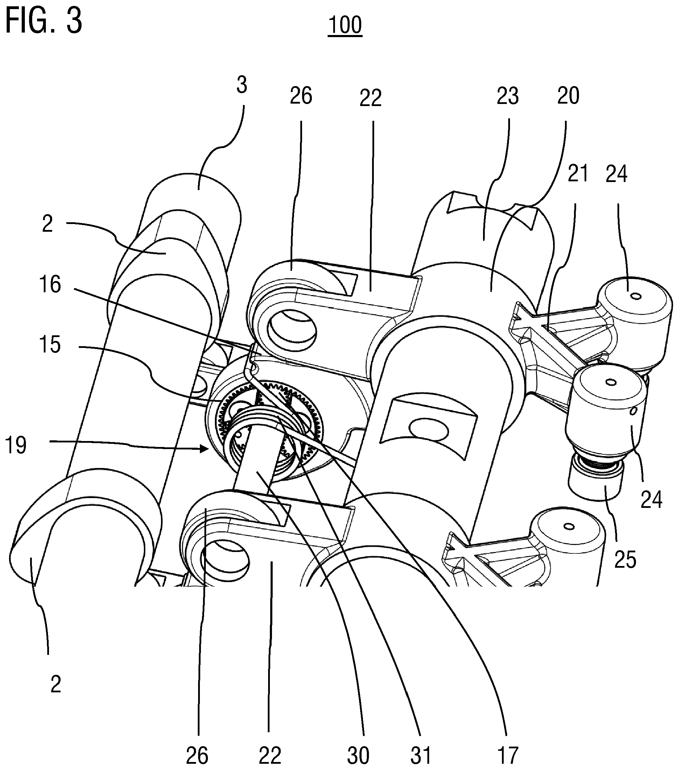

Figur 1 zeigt eine Seitenansicht eines variablen Ventiltriebes 1 gemäß einer Ausführungsform der Erfindung. Figur 3 zeigt eine entsprechende perspektivische Ansicht. Der Ventiltrieb 1 dient zur Betätigung von Ladungswechselventilen (nicht gezeigt) einer Brennkraftmaschine, die zwischen einer Schließ- und einer Öffnungsstellung mittelbar durch einen Nocken 2 einer Nockenwelle 3 periodisch bewegbar sind.

Der Ventiltrieb 1 umfasst eine schaltbare Kipphebelanordnung zur Betätigung der Hubventile. Die Kipphebelanordnung umfasst einen ersten Kipphebel (Ventilkipphebel) 20, der um eine Kipphebelachse 23 schwenkbar gelagert ist, und einen zweiten Kipphebel (Übertragungskipphebel) 10, der auf einer weiteren Kipphebelachse 13 schwenkbar gelagert ist. Die beiden Kipphebelachsen 13, 23 sind räumlich getrennt, jedoch beide parallel zur Achse 3a der Nockenwelle 3.

Der Ventilkipphebel 20 steht an einem ventilseitigen Ende 21, d. h. mit seinem ventilseitigen Hebelarm 21, mit zwei Hubventilen (nicht gezeigt) in Wirkkontakt. Der ventilseitige Hebelarm 21 des Ventilkipphebels 20 ist hierzu als Zwei-Ventil-Hebelarm ausgeführt, um zwei Ladungswechselventile gleichzeitig zu betätigen. Hierzu ist der ventilseitige Hebelarm 21 gabelförmig ausgeführt, was in Figur 3 erkennbar ist. Wie in Figur 3 ferner erkennbar ist, sind zwei derartige Ventilkipphebelanordnungen in Axialrichtung der Nockenwelle hintereinander angeordnet, um vier Hubventile zu betätigen. Die Gesamtheit dieser Anordnung der zwei Ventiltriebe ist mit dem Bezugszeichen 100 bezeichnet.

An jedem ventilseitigen Ende des Hebelarms 21 ist eine Aufnahme 24 angeordnet. Die Aufnahme 24 kann zur Lagerung eines an sich bekannten hydraulischen Ventilspielausgleichelements 25 verwendet werden. Anstatt eines hydraulischen Ventilspielausgleichselements kann in der Aufnahme 24 bei entsprechender Bearbeitung auch eine Schraube mit Elefantenfuß aufgenommen sein, mittels derer ein Ventilspiel manuell nachjustiert werden kann.

Hydraulische Ventilspielausgleichselemente (HVA) in Brennkraftmaschinen sind an sich bekannt und dienen dazu, insbesondere die sich über die Betriebsdauer ändernden Längenabmessungen der Ladungswechselventile so auszugleichen, dass in der Grundkreisphase des das Ventil betätigenden Nockens ein sicheres Ventilschließen gewährleistet ist. Dabei soll andererseits die Nockenerhebung verlustfrei auf das Ventil übertragen und somit in eine Ventilhubbewegung umgewandelt werden. Die Wirkungsweise derartiger hydraulischer Ventilspielausgleichselemente, die im Kraftfluss einer Ventilsteuerung, insbesondere einer Brennkraftmaschine, angeordnet sind, wird als bekannt vorausgesetzt.

Der Ventilkipphebel 20 ist an einem Kipphebellagerbock (nicht gezeigt) gehaltert, wobei an dem Kipphebellagerbock die Kipphebelachse 23 angeordnet ist, auf die der Ventilkipphebel 20 mit einer zugeordneten Bohrung schwenkbar aufgesteckt und mittels einer axialen Lagesicherung gehalten ist. Im vorliegenden Ausführungsbeispiel ist die axiale Lagesicherung als Eingriffselement-Gegenelement-Verbindung zwischen dem Lagerbock und dem Kipphebel ausgeführt, bei der ein quer zur Achsrichtung ausgerichtetes Eingriffselement, z. B. in Form eines Ringsteges 27, in ein zugeordnetes Gegenelement (nicht dargestellt) mit axialer Flankenabstützung schwenkbeweglich eingreift. Die axiale Lagesicherung kann jedoch auch in an sich bekannter Weise über Anlageflächen an den Kipphebelflanken erfolgen. Diese Flanken können beispielsweise durch Kalibrierung des Schmiederohlings bzw. durch mechanische Bearbeitung erstellt sein. Lagerbockseitig kann die Fixierung ebenfalls über entsprechend bearbeitete Flächen sowie mittels Scheiben und Sicherungsringen erfolgen. Weiter sind axiale Lagesicherungen zwischen einem Kipphebel und der Achse bekannt. Beispielsweise weist dazu ein Bereich der Achse, welcher von der Bohrung des Kipphebels umschlossen ist, eine Ringnut auf, in der ein Sprengring verläuft, welcher zugleich mit seinem außen liegenden Ringabschnitt in einer Ringnut des Kipphebels verläuft.

An seinem in Bezug auf die Kippachse 23 gegenüberliegenden Ende 22, d. h. am nockenwellenseitigen Hebelarm 22, ist an dessen distalen Ende des Hebelarms 22 eine Rolle 26 angeordnet.

Der Übertragungskipphebel 10 steht an einem nockenwellenseitigen Ende 11 mit dem Nocken 2 der Nockenwelle 3 in Eingriff. Hierzu ist am nockenwellenseitigen Ende 11 eine Rolle 18, z. B. eine Druckrolle, angeordnet, die auf dem Nocken 2 der Nockenwelle 3 abrollt und so die Nockenbewegung abgreift. Der Übertragungskipphebel 10 steht ferner an dem in Bezug auf die Kipphebelachse 13 anderen Ende 12 über eine hubvorgebende Oberfläche, als Konturfläche 16 bezeichnet, mit der Rolle 26 des Ventilkipphebels 20 in Wirkverbindung, d. h., die Rolle 26 des Ventilkipphebels 20 rollt bei einer von der Nockenbewegung erzeugten Kippbewegung des Übertragungskipphebels 10 auf der Konturfläche 16 ab, wodurch eine korrespondierende Kippbewegung des Ventilkipphebels 20 erzeugt wird. Der Übertragungskipphebel 10 überträgt durch seine Kippbewegung die Nockenbewegung auf den Ventilkipphebel 20, der wiederum durch seine entsprechend resultierende Kippbewegung den Ventilhub erzeugt. Übertragungskipphebel 10 und Ventilkipphebel 20 sind auf diese Weise in Serie geschaltet. Nockenwelle 3 und Ventilkipphebel 20 können hierzu in an sich bekannter Weise ausgeführt sein und werden durch den dazwischen angeordneten Übertragungshebel 10 miteinander bewegungsgekoppelt.

Die Konturfläche 16, auf der sich die Ventilkipphebelrolle 26 abstützt, dient als Abrollbereich, auf dem die Ventilkipphebelrolle 26 bei der Übertragung der Kippbewegung des Übertragungskipphebels 10 auf den Ventilkipphebel 20 hin- und herrollt. Durch die Ausgestaltung dieser als Abrollfläche dienenden Konturfläche 16 kann somit das Hubverhalten des Hubventils vorgegeben und auch variiert werden.

Wie in Figur 1 erkennbar ist, wird die Nockenbewegung über ein Planetengetriebe 19 übertragen. Hierbei weist der Übertragungskipphebel 10 ein Planetenträgerelement 14 auf, das an seinem nockenwellenseitigen Ende 11 die gelagerte Rolle 18 aufweist. An seinem gegenüberliegenden Ende führt das Planetenträgerelement 14 drei Planetenräder 17, die in einem in das Planetenträgerelement eingepressten Hohlrad 15 angeordnet sind und mit dessen Innenverzahnung 15a kämmen. Die Planetenräder 17 kämmen ferner mit einem auf der Welle 13 angeordneten Sonnenrad (nicht sichtbar), welches somit im Mittelpunkt der Planetenräderanordnung positioniert ist.

Die Nockenkontur wird somit vom Planetenträgerelement 14 abgegriffen, dessen Winkelbetrag der Verkippung unabhängig vom eingestellten Ventilhub über den gesamten Betrieb konstant bleibt. Durch die Verkippung des Planetenträgerelements 14 und der daraus resultierenden Verdrehung der Planetenräder 17 ergibt sich die Verdrehung des Hohlrades 15 mit einer entsprechenden Übersetzung. Das Hohlrad 15 ist Teil eines Bauteils, vorstehend auch als zweiter Hebel des Übertragungskipphebels bezeichnet, das die hubvorgebende Konturfläche 16 ausbildet, auf welcher die Kipphebelrolle 26 des Kipphebels 20 abrollt. Durch die Verkippung des Planetenträgerelements 14 verdreht sich das Hohlrad 15 mit der Rollenkontur 16 mit einer entsprechenden Übersetzung. Dabei rollt die Kipphebelrolle 26 auf der Rollenkontur 16 ab und öffnet dementsprechend die Ventile.

Das Sonnenrad ist drehfest auf einer Durchgangswelle 30 angeordnet, welche über alle Zylinder durchgehend gestaltet ist und für jeden Zylinder jeweils ein Sonnenrad aufweist. Die Durchgangswelle ist mit einem Elektromotor (nicht gezeigt) als Stellmotor verbunden, welcher bei entsprechender Ansteuerung die Durchgangswelle 30 gezielt verdrehen kann zur Verstellung des Ventilhubs und/oder der Ventilöffnungszeiten und Ventilschließzeiten.

Ein Vorteil der Erfindung liegt somit in der gleichzeitigen Steuerung der Variabilität des Ventilhubs über alle Zylinder über nur einen Stellmotor, welcher lediglich eine Drehbewegung mit geringem Drehwinkelbetrag ausführt.

Der Nockenfolgehebel 15 ist mittels einer Rückstellfeder 17 über einen Rückstellfederanschlagpunkt 17a vorgespannt, so dass der gesamte Übertragungskipphebel 10 von der Federkraft der Rückstellfeder gegen die Nockenwelle 3 gedrückt wird.

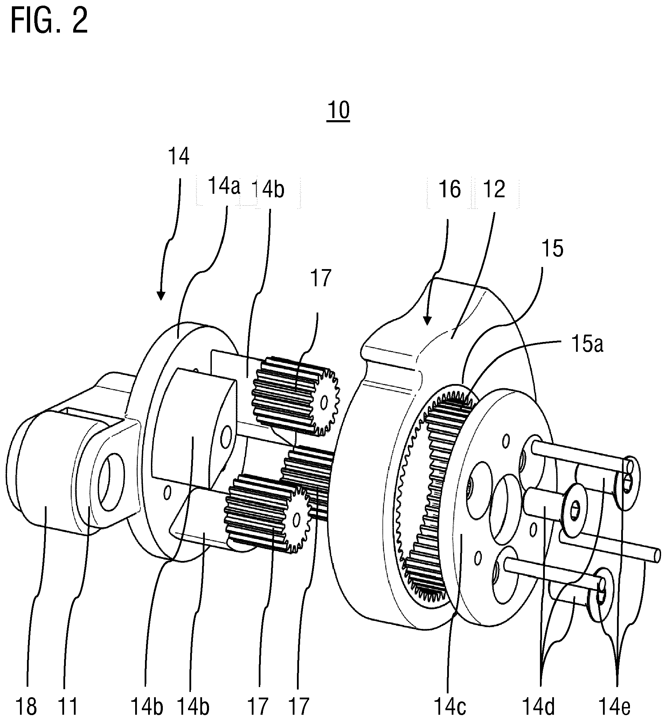

Der vorstehend beschriebene Aufbau des Übertragungskipphebels 10 ist in der perspektivischen Explosionsdarstellung der Figur 2 gut erkennbar. Das Planetenträgerelement 14 führt Planetenräder 17, die jeweils mittels eines Stiftes zwischen einem Aufnahmeelement 14a und einem Deckel 14c des Planetenträgerelements 14 geführt sind, wobei der Deckel 14c mittels dreier Senkschrauben 14d auf den drei Abstützelementen 14b befestigt ist.

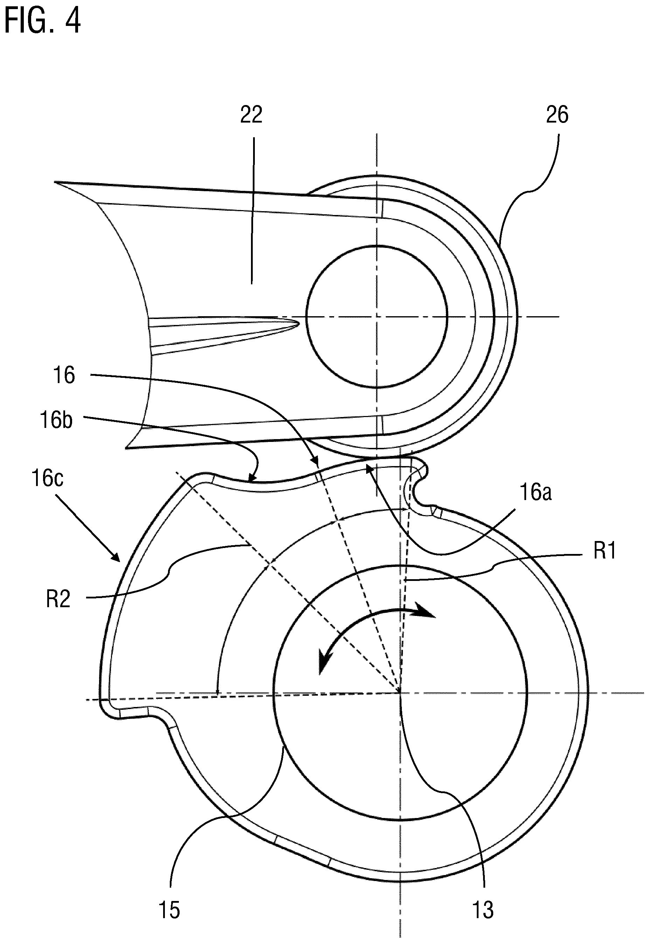

Figur 4 zeigt eine Detailansicht der Kopplung zwischen Ventilkipphebel 20 und dem Übertragungskipphebel 10 an der Konturfläche 16. Die Konturfläche 16 weist in diesem Ausführungsbeispiel drei unterschiedliche Bereiche 16a, 16b und 16c auf, die als Abrollbereiche für die Rolle 26 dienen können.

Der erste Abrollbereich 16a bildet die Grundkreiskontur aus, d. h. wenn die Rolle 26 auf diesem Bereich abrollt, erzeugt der Ventilkipphebel 20 keinen Ventilhub. Der Abstand der Punkte auf der ersten Abrollfläche 16a zur Kipphebelachse 13, d. h. deren Radialabstand R1, ist konstant. Die Konturfläche 16 umfasst ferner einen sich an den ersten Abrollbereich 16a unmittelbar anschließenden zweiten Abrollbereich 16b, der eine Rampenkontur aufweist. Der Radialabstand der Abrollpunkte nimmt auf dem zweiten Abrollbereich ausgehend von einem Wert R1 bis auf einen Wert R2 zu. Wenn die Rolle 26 somit von dem ersten Bereich 16a kommend auf dem zweiten Bereich 16b abrollt, verkippt sich der Ventilkipphebel 20 umso mehr, je weiter die Rolle 26 auf dem zweiten Abrollbereich 16b abrollt. Der erzeugte Ventilhub ist folglich umso größer, je weiter die Rolle 26 des Ventilkipphebels 20 von dem ersten Abrollbereich 16a kommend auf dem zweiten Abrollbereich 16b abrollt.

An den zweiten Abrollbereich 16b schließt sich ein dritter Abrollbereich 16c an, der einen konstanten Radialabstand R2 aufweist und eine Ventilstellung mit maximalem Ventilhub erzeugt, wenn die Rolle 26 des Ventilkipphebels 20 auf dem dritten Abrollbereich 16c abrollt.

Wie vorstehend bereits beschrieben, umfasst der Ventiltrieb 1 einen Elektromotor als Stelleinrichtung zum Ändern der Verdrehstellung der Sonnenradwelle 30. Durch Ändern der Verdrehstellung der Sonnenradwelle 30 wird die Konturfläche 16 um die Kipphebelachse 13 des Übertragungskipphebels 10 ebenfalls verdreht, um eine Verschiebung eines Abrollbereichs der Rolle 26 des Ventilkipphebels 20 auf der Konturfläche 16 zu erzeugen. Dadurch ändert sich der von der Rolle des Ventilkipphebels abgerollte bzw. abgegriffene Bereich der Konturfläche 16 und dadurch auch der resultierende Ventilhub und/oder die Ventilöffnungs- bzw. Schließzeiten.

Durch das gezielte Ändern der Verdrehstellung der Sonnenradwelle 30 kann somit die Verdrehposition des Bauteils des Übertragungskipphebels, dass das Hohlrad 15 aufweist, relativ zum Planetenträgerelement 14 verändert werden, um einen Abrollbereich der Rolle 26 des Ventilkipphebels 20 auf der Konturfläche 16 zu verändern. In jeder der unterschiedlichen einstellbaren Verdrehposition sind Planetenträgerelement und Hohlrad 15 dann wieder bewegungsgekoppelt bezüglicher einer Schwenkbewegung (Kippbewegung) um die Kipphebelachse 13.

Beispielsweise kann die Stelleinrichtung ausgeführt sein, zwei unterschiedliche Verdrehpositionen des Hohlrads 15 bzw. der Konturfläche 16 relativ zum Planetenträgerelement 14 einzustellen, wodurch sich zwei unterschiedliche Abrollbereiche für die Rolle 26 des Ventilkipphebels 10 ergeben. Für diese Anwendung könnte auch ein üblicher hydraulischer Nockenwellenversteller anstatt eines Elektromotors genutzt werden.

Lediglich beispielhaft kann in einer ersten eingestellten Verdrehposition die Rolle 26 bei einer durch den Nocken 2 erzeugten Kippbewegung des Übertragungskipphebels 10 auf einem ersten Abrollbereich hin- und her rollen, der nahezu den ganzen ersten Abrollbereich 16a und einen ersten Teilbereich des zweiten Abrollbereichs 16b umfasst. In einer zweiten eingestellten Verdrehposition kann die Rolle 26 bei einer durch den Nocken 2 erzeugten Kippbewegung des Übertragungskipphebels 10 bzw. des Hohlrads 15 dagegen auf dem zweiten Abrollbereich hin- und her rollen, der nahezu den ganzen zweiten Abrollbereich 16b und einen Teilbereich des dritten Abrollbereichs 16c umfasst.

Wird der Ventiltrieb 1 von dem ersten Abrollbereich auf den zweiten Abrollbereich umgeschaltet, vergrößert sich der von der Nockenwelle 3 erzeugbare Ventilhub.

Die Stelleinrichtung kann so ausgelegt sein, dass sie eine Verdrehposition des zweiten Hebels relativ zum ersten Hebel in zwei vorbestimmte Lagen einstellen kann, so dass zwei verschiedene, vorbestimmte Abrollbereiche auf der Konturfläche 16 und damit Ventilhübe schaltbar sind. Alternativ kann die Stelleinrichtung auch so ausgelegt sein, dass mehr als zwei vorbestimmte Verdrehpositionen einstellbar sind oder die Verdrehposition innerhalb vorgegebener Grenzen stufenlos veränderbar ist. Bei letzterer Variante kann der Ventilhub stufenlos variiert werden.

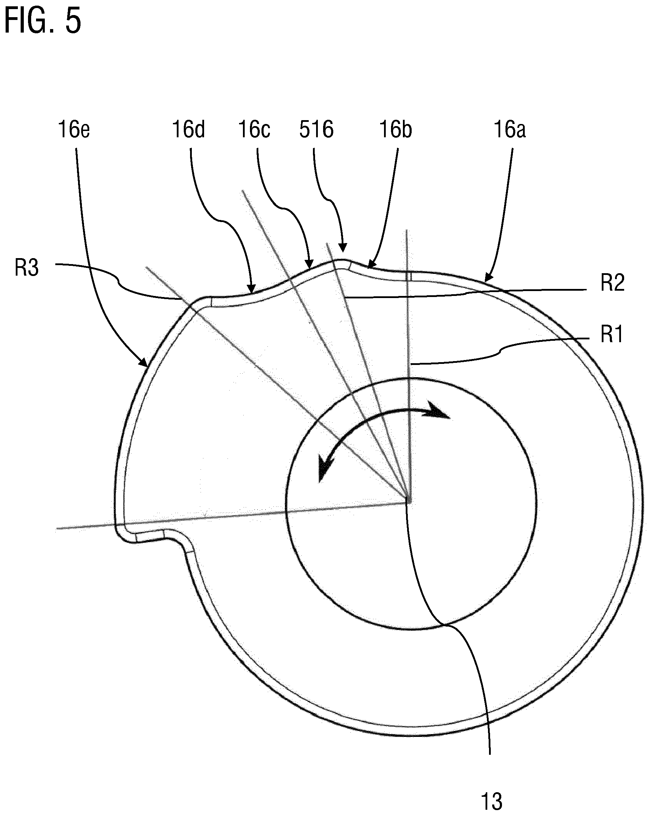

Figur 5 zeigt eine Seitenansicht des Hohlrads 15 mit der Konturfläche 516 des Übertragungskipphebels 10 gemäß einer weiteren Ausführungsform der Erfindung. Bei dieser Ausführungsform weist die Konturfläche 516 fünf verschiedene Abrollbereiche 16a - 16e auf. Der erste Abrollrollbereich 16a bildet wiederum die Grundkreiskontur mit konstantem radialen Abstand R1 zur Achse 13. Der sich anschließende zweite Abrollbereich 16b bildet wiederum eine Rampenkontur aus, mit ansteigendem Radialabstand, der am Ende des zweiten Abrollbereichs auf den Wert R2 angestiegen ist. Der sich anschließende dritte Abrollbereich 16c bildet nun wiederum einen Bereich mit konstantem Radialabstand R2 aus.

An diesen dritten Abrollbereich 16c schließt sich nun in Abrollrichtung ein vierter Abrollbereich 16d an, der wiederum eine Rampenkontur ausbildet. Am Ende des vierten Abrollbereichs 16d ist der Radialabstand auf den Wert R3 gestiegen. An den vierten Bereich schließt sich nun ein fünfter Abrollbereich 16e an, der wiederum einen konstanten Radialabstand aufweist. Die Abrollpunkte auf dem fünften Abrollbereich 16e weisen einen konstanten radialen Abstand zur Kipphebelachse des Übertragungshebels auf. Der radiale Abstand R3 des fünften Abrollbereichs 16e ist größer als der Radialabstand R2 des dritten Abrollbereichs 16c und größer als der Radialabstand R1 des ersten Abrollbereichs 16a. Bei dieser Ausführungsvariante mit fünf Abrollbereichen bildet der dritte Bereich 16c eine Mittelstellung aus, in der das Hubventil kurzeitig, d. h. während des Abrollens der Rolle 26 auf dem dritten Bereich 16c, in einer Öffnungsstellung mit konstanter Hubhöhe, die kleiner als die maximale Hubhöhe ist, offengehalten wird.

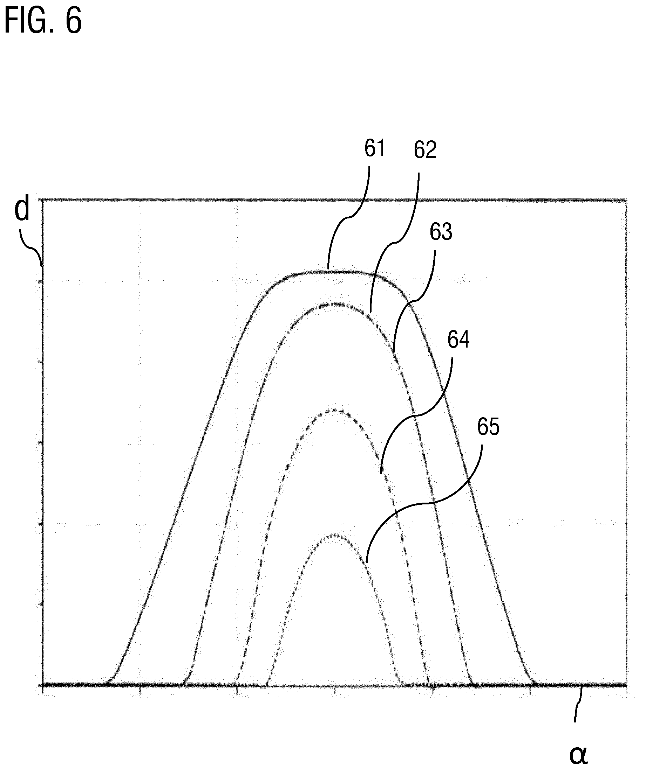

Figur 6 illustriert verschiedene, mit dem Ventiltrieb einstellbare Hubkurven. Die Abszissenachse entspricht dem Drehwinkel α der Nockenwelle 3. Die Ordinatenachse entspricht dem Ventilhub d. Die Kurven 61 bis 64 zeigen vier verschiedene einstellbare Ventilhubverläufe in Abhängigkeit vom Drehwinkel der Nockenwelle. Jede der vier Kurven 61 bis 64 entspricht einer bestimmten mittels der Stelleinrichtung eingestellten Verdrehposition vom zweiten Hebel 15 zum ersten Hebel 14 des Übertragungskipphebels 10. Hierbei entspricht die Kurve 61 einer eingestellten Verdrehposition, die den größten Ventilhub und die kürzesten Ventilschließzeiten erzeugt, während die Kurve 65 dagegen den geringsten Ventilhub und die längsten Ventilschließzeiten erzeugt. Gemäß der Variante 61 ist somit eine dachförmige Hubkurve durch kurzzeitiges Offenhalten der Ventile auf einem konstanten Ventilhub möglich. Durch symmetrische Verkleinerung oder Vergrößerung der Hubkurve können ebenso die Öffnungs- und Schließzeitpunkte der Ventile variiert werden.

### Bezugszeichenliste

- 1: Variabler Ventiltrieb
- 2: Nocken
- 3: Nockenwelle
- 3a: Nockenwellenachse
- 10: Übertragungskipphebel
- 11: Erstes Ende
- 12: Zweites Ende
- 13: Kipphebelachse des Übertragungskipphebels
- 14: Planetenträgerelement
- 14a: Aufnahmeelement
- 14b: Abstützelement
- 14c: Deckel
- 14d: Senkschraube
- 14e: Stift
- 15: Hohlrad
- 15a: Innenverzahnung
- 16,516: Konturfläche
- 16a, 16b, 16c, 16d, 16e: Abrollbereiche
- 17: Planetenrad
- 18: Rolle
- 19: Planetengetriebe
- 20: Ventilkipphebel
- 21: Erstes Ende bzw. ventilseitiger Hebelarm
- 22: Zweites Ende bzw. nockenwellenseitiger Hebelarm
- 23: Kipphebelachse des Ventilkipphebels
- 24: Aufnahme
- 25: Hydraulisches Ventilspielausgleichselement
- 26: Rolle
- 27: Ringsteg
- 30: Sonnenradwelle
- 31: Rückstellfeder
- 61-65: Ventilhubverlaufskurve
- 100: Anordnung
- R1, R2, R3: Radialabstand

## Patentansprüche

1. Variabler Ventiltrieb (1) für ein Hubventil, insbesondere für ein Ladungswechselventil einer Brennkraftmaschine, das zwischen einer Schließ- und einer Öffnungsstellung mittelbar durch einen Nocken einer Nockenwelle periodisch bewegbar ist, umfassend
eine schaltbare Kipphebelanordnung zur Betätigung des Hubventils, aufweisend einen Übertragungskipphebel (10) und einen Ventilkipphebel (20), die auf verschiedenen Kipphebelachsen (13, 23), die jeweils parallel zur Nockenwellenachse (3a) sind, verschwenkbar gelagert sind,
wobei der Ventilkipphebel (20) an einem ersten Ende (21) mit dem Hubventil in Wirkkontakt steht und an einem zweiten Ende (22) eine Rolle (26) aufweist,
wobei der Übertragungskipphebel (10) an einem ersten Ende (11) mit einem Nocken (2) der Nockenwelle (3) in Eingriff steht und an einem zweiten Ende (12) über eine Konturfläche (16) mit der Rolle (26) des Ventilkipphebels (20) in Wirkverbindung steht, derart, dass eine Kippbewegung des Übertragungskipphebels (10) eine Kippbewegung des Ventilkipphebels (20) erzeugt, bei der die Rolle (26) des Ventilkipphebels (20) auf der Konturfläche (16) abrollt; und
eine Stelleinrichtung zum Schalten der Kipphebelanordnung, mittels derer die Konturfläche (16) mittels eines Planetengetriebes (19) um die Kipphebelachse (13) des Übertragungskipphebels (10) verdrehbar ist, um eine Verschiebung eines Abrollbereichs der Rolle (26) des Ventilkipphebels (20) auf der Konturfläche (16; 516) zu erzeugen, **dadurch gekennzeichnet,**
a) **dass** der Übertragungskipphebel (10) aufweist:
a1) mindestens ein Planetenrad (17) des Planetengetriebes, das von einem Planetenträgerelement (14) des Übertragungskipphebels (10) geführt ist, wobei das Planetenträgerelement (14) das erste Ende (11) aufweist, das mit einem Nocken (2) der Nockenwelle (3) in Eingriff steht; und
a2) ein Hohlrad (15) des Planetengetriebes, das außenumfangseitig die Konturfläche (16) aufweist und das in das mindestens eine Planetenrad eingreift (17); und
b) **dass** ein Sonnenrad des Planetengetriebes mit einer von der Stelleinrichtung verdrehbaren Welle (30) drehfest verbunden ist.

2. Variabler Ventiltrieb (1) nach Anspruch 1, **dadurch gekennzeichnet, dass** die Stelleinrichtung eine elektrische, elektromechanische, mechanische oder hydraulische Stelleinheit umfasst, mittels derer zur Verstellung des Ventilhubs eine Verdrehstellung der das Sonnenrad tragenden Welle (30) einstellbar ist.

3. Variabler Ventiltrieb (1) nach einem der vorhergehenden Ansprüche, **dadurch gekennzeichnet, dass** die Konturfläche (16)
a) einen ersten Abrollbereich (16a) aufweist, der insbesondere eine Grundkreiskontur ausbildet, die keinen Ventilhub erzeugt, wenn die Rolle (26) des Ventilkipphebels (20) auf der Grundkreiskontur abrollt, und
b) einen sich an den ersten Abrollbereich (16a) anschließenden zweiten Abrollbereich (16b) aufweist, der eine Rampenkontur aufweist.

4. Variabler Ventiltrieb (1) nach Anspruch 3, **dadurch gekennzeichnet, dass** die Konturfläche (16) einen sich an den zweiten Abrollbereich (16b) anschließenden dritten Abrollbereich (16c) aufweist, der eine Ventilstellung mit maximalem Ventilhub erzeugt, wenn die Rolle (26) des Ventilkipphebels (20) auf dem dritten Abrollbereich (16c) abrollt.

5. Variabler Ventiltrieb (1) nach einem der vorhergehenden Ansprüche, **dadurch gekennzeichnet,**
a) **dass** die Stelleinrichtung ausgeführt ist, eine Verdrehposition der das Sonnenrad tragenden Welle (30) stufenlos zu verändern; oder
b) **dass** die Stelleinrichtung ausgeführt ist, eine Verdrehposition der das Sonnenrad tragenden Welle (30) in zwei vorbestimmte Lagen zu verändern, so dass zwei verschiedene Ventilhübe schaltbar sind.

6. Variabler Ventiltrieb (1) nach einem der vorhergehenden Ansprüche, **dadurch gekennzeichnet, dass** der Übertragungskipphebel (10) mittels einer Rückstellfeder (31) vorgespannt ist, derart, dass der Übertragungskipphebel (10) gegen die Nockenwelle (3) gedrückt wird.

7. Variabler Ventiltrieb (1) nach einem der Ansprüche 4 bis 6, **dadurch gekennzeichnet, dass** die Konturfläche (516) einen sich an den dritten Abrollbereich (16c) anschließenden vierten Abrollbereich (16d), der eine Rampenkontur ausbildet, und einen sich an den vierten Abrollbereich (16d) anschließenden fünften Abrollbereich (16e) aufweist, wobei der fünfte Abrollbereich (16e) einen konstanten radialen Abstand (R3) zur Kipphebelachse (13) des Übertragungshebels (10) aufweist, der größer ist als der Radialabstand (R2) des dritten Abrollbereichs (16c) und als der Radialabstand (R1) des ersten Abrollbereichs (16a).

8. Anordnung (100), umfassend mindestens zwei variable Ventiltriebe (1) nach einem der vorhergehenden Ansprüche, wobei die Übertragungskipphebel (10) jeweils eine gemeinsame erste Kipphebelachse (13) aufweisen, die Ventilkipphebel (20) jeweils eine gemeinsame zweite Kipphebelachse (23) aufweisen und die mindestens zwei variablen Ventiltriebe eine gemeinsame Stelleinrichtung in Form eines Elektromotors aufweisen, wobei der Elektromotor mit einer zur ersten Kipphebelachse (13) koaxialen Welle (31) in Wirkverbindung steht.

9. Kraftfahrzeug, insbesondere Nutzfahrzeug, mit einem variablen Ventiltrieb (1) oder einer Anordnung (100) nach einem der vorhergehenden Ansprüche.

## Claims

1. A variable valve drive (1) for a lifting valve, in particular for a charge-exchange valve of an internal combustion engine, which is periodically movable between a closed position and an open position indirectly by way of a cam of a camshaft, comprising
a switchable rocker lever arrangement for the actuation of the lifting valve, having a transmission rocker lever (10) and a valve rocker lever (20) which are mounted so as to be pivotable on different rocker lever axles (13, 23), which rocker lever axles are each parallel to the camshaft axis (3a),
wherein the valve rocker lever (20) is, at a first end (21), in operative contact with the lifting valve and has, at a second end (22), a roller (26) ,
wherein the transmission rocker lever (10) is, at a first end (11), in engagement with a cam (2) of the camshaft (3) and is, at a second end (12), operatively connected via a contour surface (16) to the roller (26) of the valve rocker lever (20), such that a rocking movement of the transmission rocker lever (10) generates a rocking movement of the valve rocker lever (20), during which the roller (26) of the valve rocker lever (20) rolls on the contour surface (16); and
an actuating device for the switching of the rocker lever arrangement, by means of which actuating device the contour surface (16) is rotatable around the rocker lever axle (13) of the transmission rocker lever (10) by means of a planetary gearing (19) so as to generate a displacement of a rolling region of the roller (26) of the valve rocker lever (20) on the contour surface (16; 516), **characterized**
a) **in that** the transmission rocker lever (10) has:
a1) at least one planet gear (17) of the planetary gearing, which is guided by a planet carrier element (14) of the transmission rocker lever (10), wherein the planet carrier element (14) has the first end (11), which is in engagement with a cam (2) of the camshaft (3); and
a2) a ring gear (15) of the planetary gearing, which has the contour surface (16) on the outer circumferential side and engages into the at least one planet gear (17);
and
b) **in that** a sun gear of the planetary gearing is connected rotationally conjointly to a shaft (30) which is able to be rotated by the actuating device.

2. The variable valve drive (1) according to Claim 1, **characterized in that** the actuating device comprises an electrical, electromechanical, mechanical or hydraulic actuating unit, by means of which, for the adjustment of the valve lift, a rotational position of the shaft (30) bearing the sun gear is settable.

3. The variable valve drive (1) according to either of the preceding claims, **characterized in that** the contour surface (16)
a) has a first rolling region (16a), which forms in particular a base circle contour which generates no valve lift when the roller (26) of the valve rocker lever (20) rolls on the base circle contour, and
b) has a second rolling region (16b), which adjoins the first rolling region (16a) and has a ramp contour.

4. The variable valve drive (1) according to Claim 3, **characterized in that** the contour surface (16) has a third rolling region (16c), which adjoins the second rolling region (16b) and generates a valve position with maximum valve lift when the roller (26) of the valve rocker lever (20) rolls on the third rolling region (16c).

5. The variable valve drive (1) according to one of the preceding claims, **characterized**
a) **in that** the actuating device is designed to vary a rotational position of the shaft (30) bearing the sun gear in a stepless manner; or
b) **in that** the actuating device is designed to vary a rotational position of the shaft (30) bearing the sun gear into two predetermined positions, such that switching is possible between two different valve lifts.

6. The variable valve drive (1) according to one of the preceding claims, **characterized in that** the transmission rocker lever (10) is preloaded by means of a restoring spring (31) such that the transmission rocker lever (10) is pushed against the camshaft (3).

7. The variable valve drive (1) according to one Claims 4 to 6, **characterized in that** the contour surface (516) has a fourth rolling region (16d), which adjoins the third rolling region (16c) and forms a ramp contour, and a fifth rolling region (16e), which adjoins the fourth rolling region (16d), wherein the fifth rolling region (16e) has a constant radial spacing (R3) to the axis of the rocker lever axle (13) of the transmission lever (10), which spacing is larger than the radial spacing (R2) of the third rolling region (16c) and the radial spacing (R1) of the first rolling region (16a) .

8. An arrangement (100) comprising at least two variable valve drives (1) according to one of the preceding claims, wherein the transmission rocker levers (10) each have a common first rocker lever axle (13), the valve rocker levers (20) each have a common second rocker lever axle (23) and the at least two variable valve drives have a common actuating device in the form of an electric motor, wherein the electric motor is operatively connected to a shaft (31) which is coaxial with the first rocker lever axle (13).

9. A motor vehicle, in particular utility vehicle, having a variable valve drive (1) or having an arrangement (100) according to one of the preceding claims.

## Revendications

1. Commande de soupape variable (1) destinée à une soupape de levage, en particulier une soupape d'échange de charge d'un moteur à combustion interne, qui est mobile périodiquement entre une position fermée et une position ouverte indirectement par le biais d'une came d'un arbre à cames, ladite commande comprenant
un ensemble à culbuteurs commutable destiné à actionner la soupape de levage et comportant un culbuteur de transmission (10) et un culbuteur de soupape (20) qui sont montés de manière pivotante sur des axes de culbuteur différents (13, 23) parallèles à l'axe d'arbre à cames (3a),
le culbuteur de soupape (20) étant en contact fonctionnel avec la soupape de levage à une première extrémité (21) et comportant un galet (26) à une deuxième extrémité (22),
le culbuteur de transmission (10) s'engageant à une première extrémité (11) avec une came (2) de l'arbre à cames (3) et étant relié fonctionnellement, à une deuxième extrémité (12), au galet (26) du culbuteur de soupape (20) par le biais d'une surface de contour (16) de telle sorte qu'un mouvement de basculement du culbuteur de transmission (10) génère un mouvement de basculement du culbuteur de soupape (20) lors duquel le galet (26) du culbuteur de soupape (20) roule sur la surface de contour (16) ; et
un dispositif d'actionnement destiné à commuter l'ensemble à culbuteurs, au moyen duquel la surface de contour (16) peut tourner sur l'axe de culbuteur (13) du culbuteur de transmission (10) au moyen d'un engrenage planétaire (19) afin de faire coulisser une région de roulement du galet (26) du culbuteur de soupape (20) sur la surface de contour (16 ; 516), **caractérisée en ce que**
a) le culbuteur de transmission (10) comporte :
a1) au moins une roue planétaire (17) de l'engrenage planétaire, laquelle est guidée par un élément porte-satellites (14) du culbuteur de transmission (10), l'élément porte-satellites (14) comportant la première extrémité (11) qui est en engagement avec une came (2) de l'arbre à cames (3) ; et
a2)une couronne à denture intérieure (15) de l'engrenage planétaire, laquelle comporte la surface de contour (16) du côté périphérique extérieur et s'engage dans l'au moins un engrenage planétaire (17) ; et
b) une roue solaire de l'engrenage planétaire est reliée solidairement en rotation à un arbre (30) pouvant être entraîné en rotation par le dispositif d'actionnement.

2. Commande de soupape variable (1) selon la revendication 1, **caractérisée en ce que** le dispositif d'actionnement comprend une unité d'actionnement électrique, électromécanique, mécanique ou hydraulique au moyen de laquelle une position de rotation de l'arbre (30) portant la roue solaire peut être réglée de façon à régler le levage de soupape.

3. Commande de soupape variable (1) selon l'une des revendications précédentes, **caractérisée en ce que** la surface de contour (16) comporte
a) une première région de roulement (16a) qui forme en particulier un contour de cercle de base qui ne génère pas de levage de soupape lorsque le galet (26) du culbuteur de soupape (20) roule sur le contour de cercle de base, et
b) une deuxième région de roulement (16b) qui jouxte la première région de roulement (16a) et qui comporte un contour en rampe.

4. Commande de soupape variable (1) selon la revendication 3, **caractérisée en ce que** la surface de contour (16) comporte une troisième région de roulement (16c) qui jouxte la deuxième région de roulement (16b) et qui génère une position de soupape avec levage de soupape maximal lorsque le galet (26) du culbuteur de soupape (20) roule sur la troisième région de roulement (16c) .

5. Commande de soupape variable (1) selon l'une des revendications précédentes, **caractérisé en ce que**
a) le dispositif d'actionnement est conçu pour modifier en continu une position de rotation de l'arbre (30) portant la roue solaire ; ou
b) le dispositif d'actionnement est conçu pour modifier une position de rotation de l'arbre (30) portant la roue solaire dans deux positions prédéterminées de sorte que deux levages de soupape différents peuvent être commutés.

6. Commande de soupape variable (1) selon l'une des revendications précédentes, **caractérisée en ce que** le culbuteur de transmission (10) est précontraint au moyen d'un ressort de rappel (31) de telle sorte que le culbuteur de transmission (10) soit pressé contre l'arbre à cames (3).

7. Commande de soupape variable (1) selon l'une des revendications 4 à 6, **caractérisée en ce que** la surface de contour (516) forme une quatrième région de roulement (16d) qui jouxte la troisième région de roulement (16c) et qui forme un contour en rampe, et comporte une cinquième région de roulement (16e) qui jouxte la quatrième région de roulement (16d), la cinquième région de roulement (16e) étant à une distance radiale constante (R3) de l'axe (13) du culbuteur de transmission (10), laquelle distance est supérieure à la distance radiale (R2) de la troisième région de roulement (16c) et à la distance radiale (R1) de la première région de roulement (16a).

8. Ensemble (100) comprenant au moins deux commandes de soupape variables (1) selon l'une des revendications précédentes, les culbuteurs de transmission (10) comportant chacun un premier axe de culbuteur commun (13), les culbuteurs de soupape (20) comportant chacun un deuxième axe de culbuteur commun (23) et les au moins deux entraînements de soupape variables comportant un dispositif d'actionnement commun se présentant sous la forme d'un moteur électrique, le moteur électrique étant relié fonctionnellement à un arbre (31) coaxial avec le premier axe de culbuteur (13) .

9. Véhicule automobile, notamment véhicule utilitaire, comprenant une commande de soupape variable (1) ou un ensemble (100) selon l'une des revendications précédentes.
